# EUROPEAN PATENT SPECIFICATION

(11) **EP 2 735 234 B1**
(45) Date of publication and mention of the grant of the patent: **06.01.2016**
(21) Application number: 13184829.3
(22) Date of filing: 17.09.2013
(51) Int. Cl.: A22C 29/02

(54) **An apparatus for peeling shrimp**
Vorrichtung zum Schälen von Garnelen
Appareil permettant d'éplucher des crevettes

(30) Priority: 21.11.2012 NL 2009855
(43) Date of publication of application: 28.05.2014
(73) Proprietor: Heiploeg International BV, 9974 SL Zoutkamp (NL)
(72) Inventor: Veerman, Jacobus Johannes Maria, 1132 SC Volendam (NL)
(74) Representative: Van Breda, Jacobus

(56) References cited:
- EP-A1- 0 743 010
- DE-A1- 1 454 221

## Description

The invention is in the general field of food preparation and relates to an apparatus for peeling shrimp (also known as prawns) comprising (i) a supporting surface for supporting shrimp to be peeled wherein the supporting surface is provided by an endless belt moving through at least a peeling zone of the apparatus, (ii) positioning means for positioning shrimp in a predefined orientation on the endless belt, and (iii) a press member which, for the peeling operation, can exert a pressure force on a supported shrimp. The invention also relates to a method for peeling shrimp.

Apparatus and methods for peeling shrimp are known in the prior art.

An example of such is provided by EP-A-0 743 010. EP-A-0 743 010 recites a method and apparatus for peeling shrimp, wherein the shrimp to be peeled are placed in curved form on a supporting surface with an increased friction coefficient, wherein a shifting pressure force is exerted on each of the shrimp by means of a press member which pressure force moves from the head and tail located on one side of the shrimps in the direction of the back with the armature of the shrimp opening on the backside and the meat being squeezed from the armature. This supporting surface may for instance consist of or be provided with emery cloth to provide the increased friction coefficient. A disadvantage of emery cloth is however that the shrimp will be spoilt with sand or other material that during processing comes loose from the emery cloth.

A further disadvantage of the apparatus and method for peeling shrimp of the prior art is that the peeling operation is not completely effective. A proportion of the shrimp are typically either improperly peeled or are spoiled during the peeling operation. This can occur e.g. if a shrimp does not remain in the correct position and orientation during the peeling operation.

It is an object of the invention to provide an apparatus and method for peeling shrimp that overcome one or more problems of the apparatus and methods of the prior art.

In a first aspect, the invention relates to an apparatus for peeling shrimp according to the preamble to claim 1, i.e. comprising (i) a supporting surface for supporting shrimp to be peeled wherein the supporting surface is provided by an endless belt moving through at least a peeling zone of the apparatus, (ii) positioning means for positioning shrimp in a predefined orientation on the endless belt, and (iii) a press member which, for the peeling operation, can exert a pressure force on a supported shrimp.

The apparatus of EP-A-0 743 010 is an example of such an apparatus. As described therein, the peeling principle underlying such an apparatus is based on the insight that it is possible to squeeze a shrimp from its armature, usually called its shell, if the pressure force is exerted in a proper manner. The "proper manner" involves applying a pressure force, preferably a shifting pressure force, from the head and tail of a shrimps in the direction of its back (shrimp, in particular cooked shrimp, typically have a curved shape such that with the shrimp being on its side and viewed from above the head and tail are on one side of the shrimp extending away from the back such that the head and tail are relatively close together). If such a force is applied, the meat of the shrimp can be squeezed outwards through the rings of the dorsal armature without the meat being crushed or flattened.

The apparatus of the present invention is characterised **in that** a shrimp-contacting surface of the endless belt is provided with uniformly-spaced protrusions made from the belt-material and extending from the belt, and substantially covering the shrimp contacting surface of the endless belt. The advantage of providing such protrusions is that they are integral with the belt and therefore cannot compromise the quality of the shrimp. A further advantage with such protrusions is that once a shrimp has been placed on the endless belt with a particular predefined orientation, it is effectively retained in position during the peeling operation by the protrusions. Through minimising the number of shrimp reaching the press member in an incorrect orientation and by preventing the shrimp from being displaced during the peeling operation the efficiency of the peeling operation (in terms of the ratio peeled shrimp out/unpeeled shrimp in) is improved compared to peeling using an apparatus of the prior art. The provision of protrusions is an alternative and/or more effective means for improving the efficiency of the peeling operation than providing a shrimp contacting surface having a high coefficient of friction.

The protrusions preferably have a flat-topped cone shape, the diameter of the flat-top of the protrusion being in the range of 0.15-0.55 mm, the diameter of the base of the protrusions being in the range of 0.25-1.25 mm and the height of the protrusions being in the range of 0.02-0.30 mm. Such protrusion have been found to effectively retain shrimp during the peeling operation without causing damage to the shrimp.

In alternative embodiments, the protrusions may have for example a pyramidal shape i.e. having polygonal cross-section, preferably also being flat-topped. Such prevents damage to shrimps being retained by the protrusions.

In a preferred embodiment, the protrusions are arranged at the vertices of an imaginary square or rectangular grid pattern, the longest distance between any two neighbouring protrusions being in the range of 0.5-2 mm. Such an arrangement is advantageous both from the point of view of simplifying manufacture and in that shrimp are effectively retained. Shrimp may be placed in any position on the belt and will be predictably retained in a predefined orientation.

In a further preferred embodiment, the endless belt comprises one or more metal sheets, such as steel sheets, joined to form a closed loop. Metal sheets can be manufactured with protrusions at their surface, e.g. by etching, that have the required physical characteristics and durability for retaining shrimp during a peeling operation over a sustained period of time.

The metal sheets are preferably comprised of a corrosion resistant metal, such as a corrosion resistant steel. Such is beneficial for their longevity in a moisture- and salt- rich environment such as a is commonly found in a shrimp-peeling facility. This is also beneficial for meeting the requirements that apply to processing of food intended for human consumption.

The one or more metal sheets preferably have a thickness in the range of 0.15-0.60 mm. Such provides a good balance between strength and flexibility.

In a second aspect, the invention relates to a method for peeling shrimp according to claim 7, using an apparatus for peeling shrimps according to the invention, wherein the shrimp to be peeled are placed in a curved form on a supporting surface and a shifting pressure force is exerted on each shrimp by means of a press member, which pressure force moves from the head and tail located on one side of the shrimps in the direction of the backside, with the armature of the shrimp opening on the backside and the meat being squeezed from the armature, wherein the method further comprises retaining the shrimp during peeling on the supporting surface peeled with uniformly-spaced protrusions substantially covering at least a shrimp contacting part of the supporting surface.

The invention will hereafter be further elucidated with reference to the drawings of Figures 1 to 4. The drawings are provided for illustrative purposes only and are not to be considered as limiting the invention.
Fig. 1 shows a schematic side-view of the apparatus for peeling shrimp.
Fig. 2 shows a top-view of an endless belt as used in the apparatus of the invention.
Fig. 3 shows a magnified top- and side- views of a section of the endless belt of figure 2.
Fig. 4 shows a side-view of a preferred embodiment of a protrusion on the endless belt of figure 2.

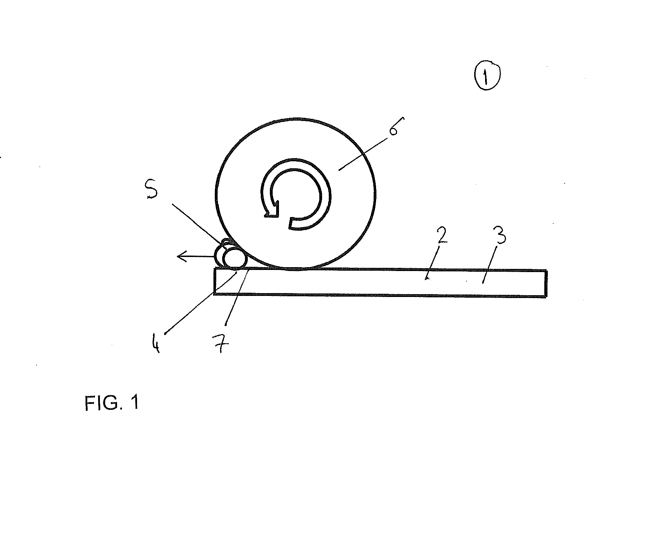

With reference to the Drawings, Figure 1 shows a schematic representation of an apparatus for peeling shrimp 1 according to the invention comprising (i) a supporting surface 2 for supporting shrimp to be peeled wherein the supporting surface 2 is provided by an endless belt 3 moving through at least a peeling zone 4 of the apparatus, (ii) positioning means 5 (not shown) for positioning shrimp in a predefined orientation on the endless belt 3, and (iii) a press member 6 which, for the peeling operation, can exert a pressure force on a supported shrimp S.

The positioning of the shrimp S may be simply done by a person placing the shrimps on the endless belt in a particular orientation, or be done by means for automatic placement of the shrimp S. Preferably indeed the positioning means are automated, such as by use of one or more robotic positioning means. Suitable positioning means are known from e.g. NL 2005939.

The principle underlying peeling shrimps with an apparatus for peeling shrimp, such as the apparatus of the invention is detailed in e.g. EP-A-0 743 010 and is familiar to a person skilled in the art. For the sake of clarity, the principle has also been outlined above.

When a shrimp is located in the peeling zone 4 of the apparatus, a press member 6 (in this example embodied as a roller), is moved towards the shrimp S in order to squeeze the meat from the shell in the above-described manner. The endless belt 3 may itself be sufficiently rigid to support the shrimp during the peeling operation (i.e. it does not become overly stretched or deformed as a result of contact between the pressure member and a shrimp to be peeled) or in an alternative embodiment, a suitably hard surface is provided under the endless belt at least in the peeling zone, such that the surface and the endless belt are in contact during the peeling operation to provide a sufficient resistive force for effective peeling.

After pressing the shrimp to be peeled, the roller is withdrawn. The separated shrimp meat and shell are then carried out of the peeling zone by the endless belt for further processing including e.g. separation, washing, packing etc.

The invention is characterised by the provision of uniformly-spaced protrusions 8 substantially covering the shrimp contacting surface 7 of the endless belt 3 for maintaining the shrimp in position on the endless belt 3 during peeling.

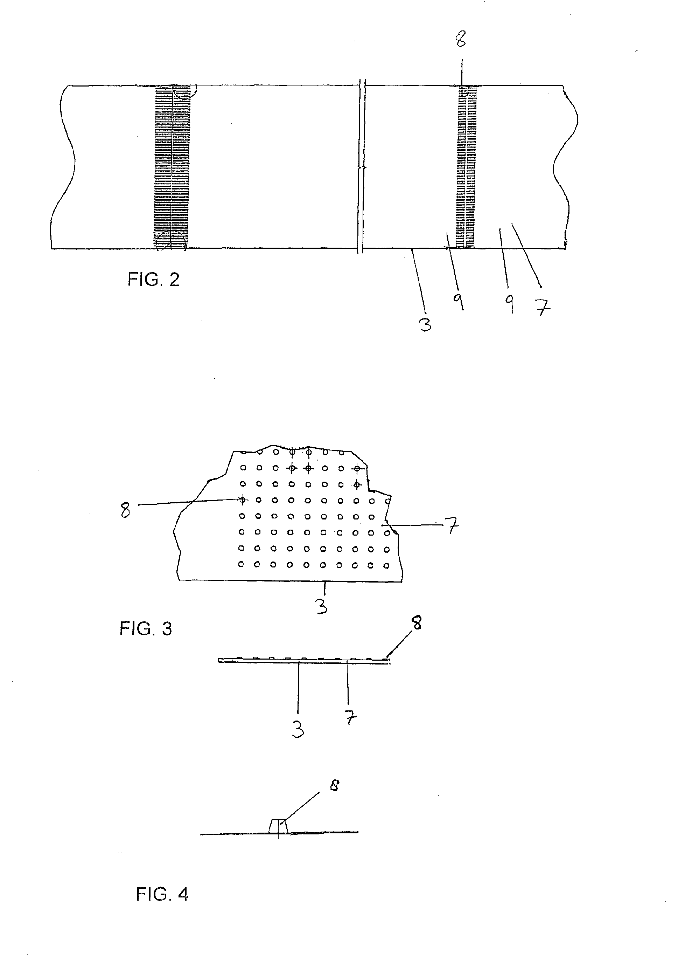

The protrusions 8 are more clearly shown in Figures 2, 3 and 4.

Figure 2 shows a top-view of the endless belt 3. The surface of the belt is covered with protrusions 8. As is evident from Figures 3 and 4, the protrusions 8 have a flat-topped cone shape, the diameter of the flat-top of the protrusion 8 being in the range of 0.15-0.55 mm, the diameter of the base of the protrusions 8 being in the range of 0.25-1.25 mm and the height of the protrusions 8 being in the range of 0.02-0.30 mm.

The protrusions 8 are arranged at the vertices of an imaginary square grid pattern, the longest distance between two neighbouring protrusions being in the range of 0.5-2 mm.

The endless belt comprises multiple metal sheets 9 joined to form a closed loop. The metal sheets 9 are comprised of a corrosion resistant steel and have a thickness of g-h mm.

Preferred values for the dimensions of the protrusions are diameter of flat-top 0.30 mm, diameter of base 0.50 mm, height of 0.08 mm (+0.15mm / -0.00mm tolerance) and distance between two neighbouring protrusions is 1 mm and 1.99 mm when weld is between. The metal sheets 9 are joined together for example by welding. To facilitate joining, the last row of protrusions of each sheet is absent where the two sheets are to be joined. Such as represented at the righthand side of Figure 2.

## Claims

1. An apparatus for peeling shrimp (1) comprising (i) a supporting surface (2) for supporting shrimp to be peeled wherein the supporting surface (2) is provided by an endless belt (3) moving through at least a peeling zone (4) of the apparatus, (ii) positioning means for positioning shrimp in a predefined orientation on the endless belt (3), and (iii) a press member (6) which, for the peeling operation, can exert a pressure force on a supported shrimp (S), **characterised in that** a shrimp-contacting surface (2) of the endless belt is provided with uniformly-spaced protrusions (8) made from the belt-material and extending from the belt (3), and substantially covering the shrimp contacting surface (2) of the endless belt (3) for maintaining the shrimp (S) in position on the endless belt (3) during peeling.

2. An apparatus according to claim 1, **characterised in that** the protrusions (8) have a flat-topped cone shape, the diameter of the flat-top of the protrusion being in the range of 0.15-0.55 mm, the diameter of the base of the protrusions being in the range of 0.25-1.25 mm and the height of the protrusions being in the range of 0.02-0.30 mm.

3. An apparatus according to claim 1 or 2, **characterised in that** the protrusions (8) are arranged at the vertices of an imaginary square or rectangular grid pattern, the longest distance between any two neighbouring protrusions being in the range of 0.5-2 mm.

4. An apparatus according to one or more of the preceding claims, **characterised in that** the endless belt (3) comprises one or more metal sheets (9) joined to form a closed loop.

5. An apparatus according to claim 4, **characterised in that** the metal sheets (9) are comprised of a corrosion resistant metal.

6. An apparatus according to claim 4 or 5, **characterised in that** the one or more metal sheets (9) have a thickness in the range of 0.15-0.60 mm.

7. A method for peeling shrimp using an apparatus for peeling shrimps as defined in anyone of claims 1 - 6, wherein the shrimp to be peeled are placed in a curved form on a supporting surface and a shifting pressure force is exerted on each shrimp by means of a press member, which pressure force moves from the head and tail located on one side of the shrimps in the direction of the backside, with the armature of the shrimp opening on the backside and the meat being squeezed from the armature, **characterised in that** the method further comprises retaining the shrimp during peeling on the supporting surface provided with uniformly-spaced protrusions substantially covering at least a shrimp contacting part of the supporting surface.

## Patentansprüche

1. Vorrichtung zum Schälen von Garnelen (1), welche (i) eine Auflagefläche (2) zum Auflegen von zu schälenden Garnelen aufweist, wobei die Auflagefläche (2) durch ein endloses Band (3) erzeugt wird, welches sich durch wenigstens eine Schälzone (4) der Vorrichtung erstreckt, (ii) eine Positioniereinrichtung zum Positionieren der Garnelen in einer bestimmten Ausrichtung auf dem endlosen Band (3) und (iii) ein Presselement (6), welches zur Durchführung des Schälens eine Druckkraft auf eine aufgelegte Garnele (S) aufbringen kann,
**dadurch gekennzeichnet, dass**
eine die Garnelen berührende Oberfläche (2) des endlosen Bands mit gleichförmig voneinander beabstandeten Vorsprüngen (8) versehen ist, die aus dem Bandmaterial hergestellt sind und sich von dem Band (3) erstrecken und die im Wesentlichen die die Garnelen berührende Oberfläche (2) des endlosen Bands (3) zum Halten der Garnele (S) in ihrer Position auf dem endlosen Band (3) während des Schälens abdecken.

2. Vorrichtung nach Anspruch 1,
**dadurch gekennzeichnet, dass**
die Vorsprünge (8) eine Konusform mit einer flachen Spitze aufweisen, wobei der Durchmesser der flachen Spitze des Vorsprungs in dem Bereich von 0,15-0,55 mm ist, wobei der Durchmesser der Basis der Vorsprünge in dem Bereich von 0,25-1,25 mm ist, und wobei die Höhe der Vorsprünge in dem Bereich von 0,02-0,30 mm ist.

3. Vorrichtung nach Anspruch 1 oder 2,
**dadurch gekennzeichnet, dass**
die Vorsprünge (8) an den Knotenpunkten eines gedachten quadratischen oder rechteckigen Gittermusters ist, wobei der längste Abstand zwischen jeglichen zwei benachbarten Vorsprüngen in dem Bereich von 0,5-2 mm ist.

4. Vorrichtung nach einem oder mehreren der vorhergehenden Ansprüche,
**dadurch gekennzeichnet, dass**
das endlose Band (3) ein oder mehrere Metallbleche (9) aufweist, die so verbunden sind, dass sie eine geschlossene Schleife bilden.

5. Vorrichtung nach Anspruch 4,
**dadurch gekennzeichnet, dass**
die Metallbleche (9) aus einem korrosionsbeständigen Metall bestehen.

6. Vorrichtung nach Anspruch 4 oder 5,
**dadurch gekennzeichnet, dass**
das eine oder mehrere Metallbleche (9) eine Dicke in dem Bereich von 0,15-0,60 mm aufweisen.

7. Verfahren zum Schälen von Garnelen unter Verwendung einer Vorrichtung zum Schälen von Garnelen gemäß einem der Ansprüche 1 - 6, wobei die zu schälenden Garnelen in einer gekrümmten Form auf einer Auflagefläche angeordnet und ein Verschiebedruck auf jede Garnele mittels eines Druckelements ausgeübt wird, wobei die Druckkraft sich von dem auf einer Seite der Garnelen angeordneten Kopf und Schwanz in der Richtung der Rückseite bewegt, wobei die Schale der Garnele sich auf der Rückseite öffnet und das Fleisch aus der Schale gedrückt wird,
**dadurch gekennzeichnet, dass**
das Verfahren des Weiteren das Festhalten der Garnele während des Schälens auf der Anlagefläche aufweist, die mit gleichförmig beabstandeten Vorsprüngen versehen ist, die im Wesentlichen wenigstens einen eine Garnele berührenden Teil der Ablagefläche abdecken.

## Revendications

1. Appareil permettant de décortiquer des crevettes (1) comprenant (i) une surface de support (2) destinée à supporter les crevettes à décortiquer dans lequel la surface de support (2) est pourvue d'une courroie sans fin (3) qui se déplace à travers au moins une zone de décorticage (4) de l'appareil, (ii) des moyens de positionnement permettant de positionner les crevettes suivant une orientation prédéfinie sur la courroie sans fin (3), et (iii) un organe de pression (6) qui, pour l'opération de décorticage, peut exercer une force de pression sur une crevette (5) placée sur le support, **caractérisé en ce qu'**une surface de contact avec les crevettes (2) de la courroie sans fin est munie de saillies (8) espacées uniformément et constituées du même matériau que la courroie, et qui s'étendent à partir de la courroie (3), et qui recouvrent sensiblement la surface de contact avec les crevettes (2) de la courroie sans fin (3) afin de maintenir les crevettes (S) en position sur la courroie sans fin (3) pendant le décorticage.

2. Appareil selon la revendication 1, **caractérisé en ce que** les saillies (8) ont une forme de cône à sommet aplati, le diamètre du sommet aplati de la saillie étant compris entre 0,15 et 0,55 mm, le diamètre de la base des saillies étant compris entre 0,25 et 1,25 mm et la hauteur des saillies étant comprise entre 0,02 et 0,30 mm.

3. Appareil selon la revendication 1 ou 2, **caractérisé en ce que** les saillies (8) sont agencées aux sommets d'un motif de grille rectangulaire ou carrée imaginaire, la distance la plus longue entre deux saillies adjacentes quelconques étant comprise entre 0,5 et 2 mm.

4. Appareil selon une ou plusieurs des revendications précédentes, **caractérisé en ce que** la courroie sans fin (3) comprend une ou plusieurs tôles de métal (9) réunies pour former une boucle fermée.

5. Appareil selon la revendication 4, **caractérisé en ce que** les tôles de métal (9) sont constituées d'un métal résistant à la corrosion.

6. Appareil selon la revendication 4 ou 5, **caractérisé en ce qu'**une ou plusieurs tôle(s) en métal (9) a/ont une épaisseur comprise entre 0,15 et 0,60 mm.

7. Procédé de décorticage de crevettes utilisant un appareil permettant de décortiquer des crevettes selon l'une quelconque des revendications 1 à 6, dans lequel les crevettes à décortiquer sont placées dans une forme incurvée sur une surface de support et une pression variable est exercée sur chaque crevette à l'aide d'un organe de pression, laquelle pression se déplace depuis la tête et la queue se trouvant d'un côté des crevettes en direction du dos de l'animal, la carapace de la crevette s'ouvrant sur le dos et la chair étant expulsée par pression sur la carapace, **caractérisé en ce que** le procédé comprend en outre le maintien de la crevette pendant son décorticage sur la surface de support munie de saillies espacées uniformément qui recouvrent sensiblement au moins une partie en contact avec la crevette de la surface de support.
